# EUROPEAN PATENT APPLICATION

(11) **EP 3 128 632 A1**
(43) Date of publication of application: **08.02.2017**
(21) Application number: 15425062.5
(22) Date of filing: 06.08.2015
(51) Int. Cl.: H02H 5/10, H02H 7/20

(54) **PORTABLE SAFETY DEVICE**

(71) Applicant: Giacomino, Canale, 16043 Chiavari Genova (IT)
(72) Inventor: GIACOMINO, Canale, I-16043 Chiavari Genova (IT)
(74) Representative: Sarpi, Maurizio

(57) **Abstract**

A portable safety device, configured for being mains supplied when a plug (L) is inserted into any current socket (101), wherein: a portable user device can be connected with a plug (E) to a supply socket (D); the safety device is rendered operative by an electrical interlock circuit set between the mains-supply plug (L) and the supply socket (D); activation of interlocking of the circuit is subordinate to closing of the circuit itself downstream, via switching-on of a (hold-to-run) switch (F) of the user device; and activation of the circuit is configured in such a way that the coil (A) of the contactor (M) is excited for a brief interval following upon an impulsive pressure applied by the operator on the pushbutton (B), and the consequent supply of the mains current by the contactor (M) to the user device activates flow of the mains current into the primary winding of the transformer (G) in such a way that, after release of the pushbutton (B), the voltage induced on the secondary winding of the transformer (G) will maintain the relay (C) excited, and along with this the coil (A) of the contactor (M) will be operative for interlocking the contactor (M) itself.

## Description

### Sector of the invention

The invention relates to a particular electrical interlock system located between the mains-supply plug and the supply socket.

According to the invention, the function performed via the pushbutton in order to activate electrical interlocking of the system, consequently enabling supply of the mains voltage, is subordinate to prior insertion into the socket downstream of the interlock itself of a portable user device and to hold-to-run activation of the latter (e.g., via the corresponding switch).

Following upon possible deactivation, whether intentional or due to accidental causes, of a portable user device connected to the socket of the system, the electrical interlock system is operative for removing instantaneously and automatically the mains voltage from the socket itself and hence from the portable user device connected thereto, thus safeguarding protection of the operator.

### Prior art

In the current state of the art, electrical control panels are known equipped with electrical interlocks.

There exist on the market various types of electrical control panels equipped with electrical interlock systems connected upstream of current sockets whether in the single-outlet version or in the power-strip version.

Normally, these control panels are equipped with a "Start" button and a "Stop" button in order to activate and de-activate interlocking of a contactor (Figure 11).

In regard to safety of the above safety device, a first function comes under the "Stop" button, which is operated in cases of emergency in order to remove the current supplied to a user device; a second function is performed by the safety device when there is a sudden cut in the mains voltage with the user device activated. In this case, the user device cannot start up again when the voltage returns. In either case, restart of the safety device is possible only after it has been reset (with an impulsive pressure applied on the "Start" button).

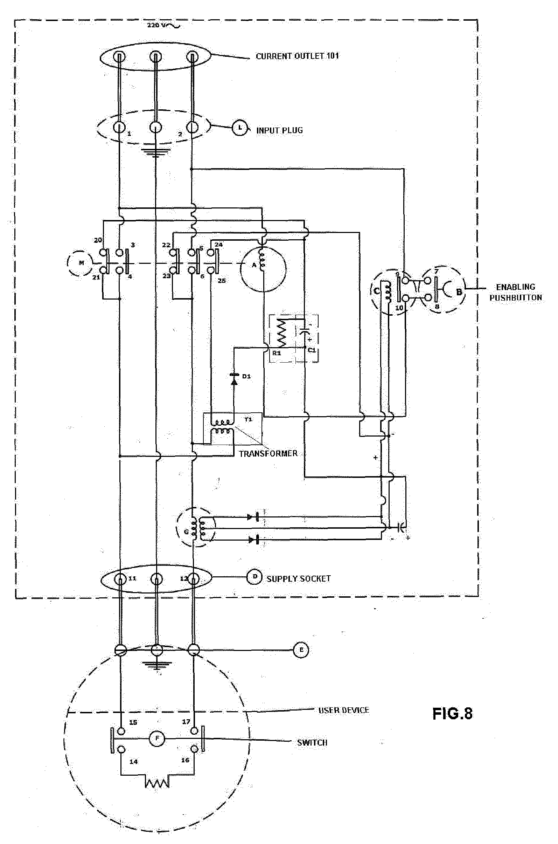

In some cases, current sockets are equipped with an interlock switch in order to comply with the relevant standard IEC EN 60469-1 (Figure 8).

These sockets, albeit equipped with an interlock switch, in terms of standards are not considered suitable in the case where electrical extensions or similar leads are used, which have at the other end a second socket; the reason for this is that in the socket itself, following upon activation of the switch, the mains voltage will be present, and in these condition insertion of a plug belonging to a user device is not allowed.

The aforesaid standard IEC EN 60469-1 envisages that the parts that can be pulled out (plugs) should be provided with a device that guarantees that the apparatuses can be plugged out or plugged back in only after their main circuit has been interrupted.

These systems currently in use are potentially risky in so far as, when extensions are used and in certain emergency situations (for instance, when an electric tool or a hair-dryer is accidentally dropped) they do not automatically remove the voltage supply, but require manual intervention on the "Stop" button. In many situations, this intervention may be impossible or tardy.

Also widely used are devices known as "residual-current devices (RCDs)" or "automatic cut-outs". These are safety devices designed to cut out the mains voltage in the case where a dispersion of current to ground is present in the circuit downstream. In particular, automatic cut-outs trip in the case of an accidental contact of a person with the power mains: in fact, in this case, what activates tripping of the protection is the dispersion of current to ground through the body of the person.

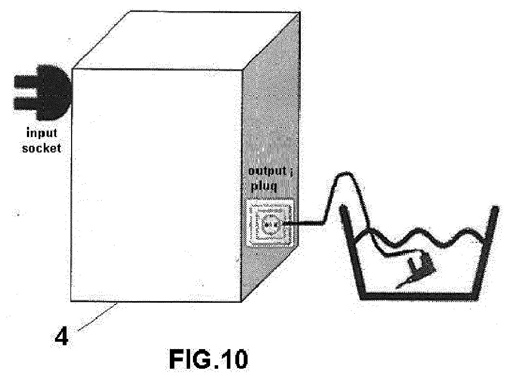

The situation is different in the case where the dispersion is between the internal electrical parts of an electric tool owing to the fact that it is immersed in water (for example, because it has been dropped therein) (Figure 10).

The most common example is that of a hair-dryer that falls into a wash-basin containing water. In this case, since the dispersion of current to ground is absent, a differential switch would not trip.

### Object of the invention

The system according to the invention has been devised in order to overcome certain deficiencies in the context of safety to which conventional devices are subject, as has been discussed above.

### Summary of the invention

The above purposes have been achieved with a system according to at least one of the annexed claims.

A first advantage lies in the fact that the system performs a function of protection in regard to the portable user device that is connected thereto, both in a condition of activation and in a condition of de-activation of the user device itself, entering into action in situations where conventional interlock circuits, interlocked sockets, and differential relays would not trip.

A further advantage lies in the fact that the protection afforded by the system has the characteristic that, in conditions of de-activation, the portable user device is always protected from any voltage.

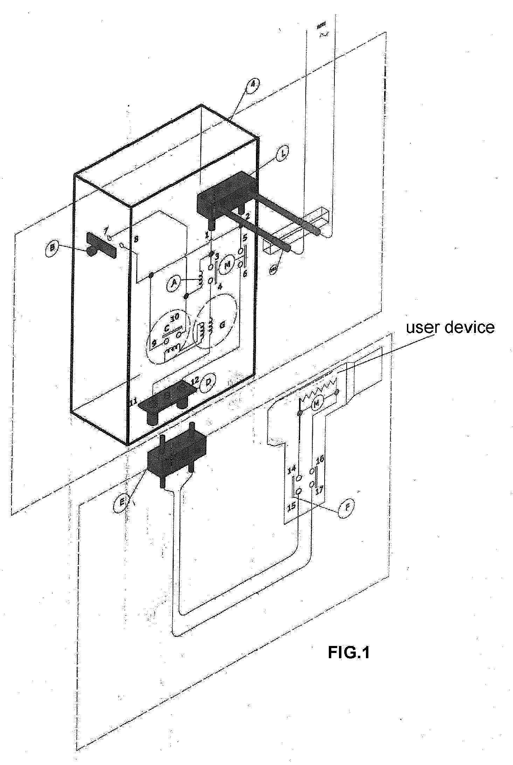

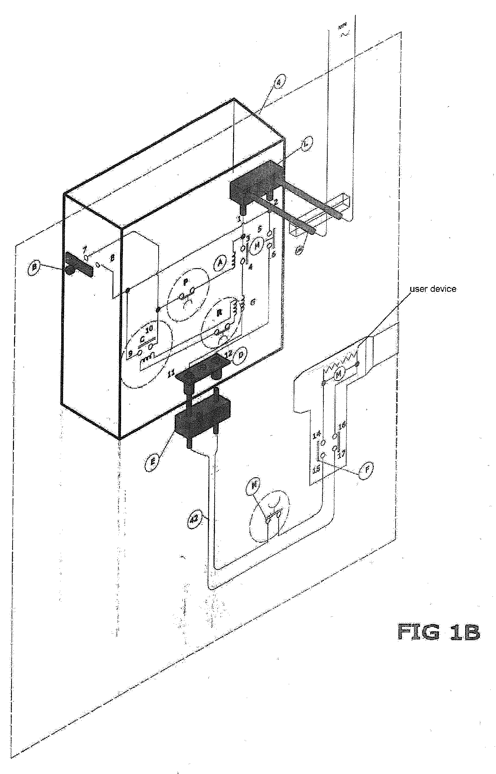

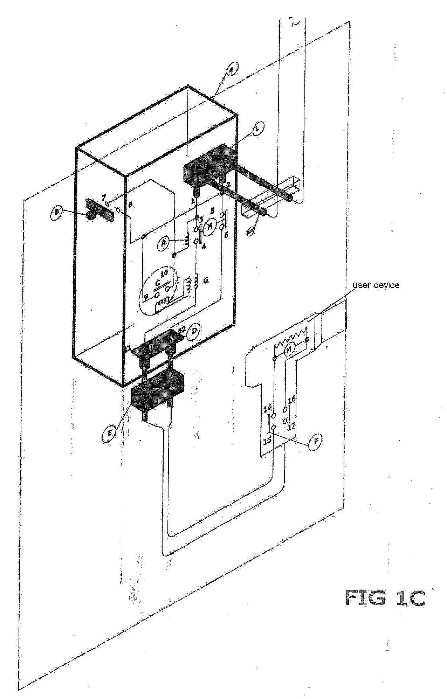

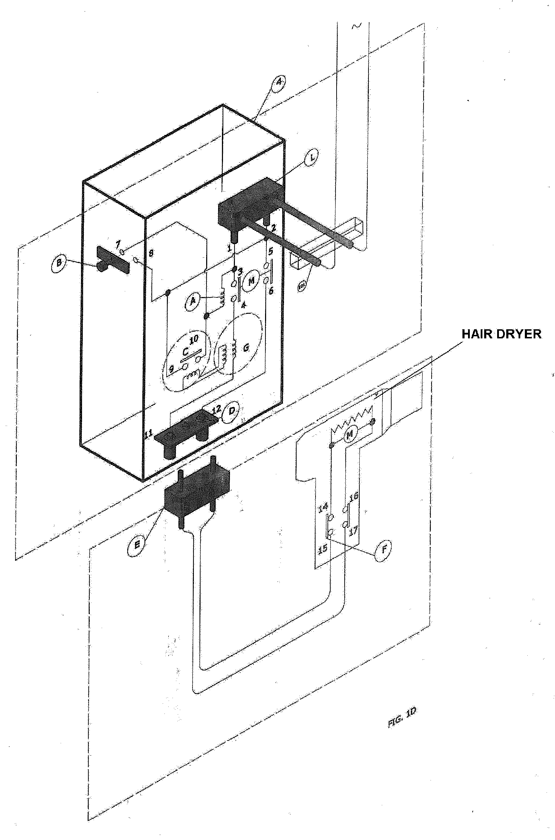

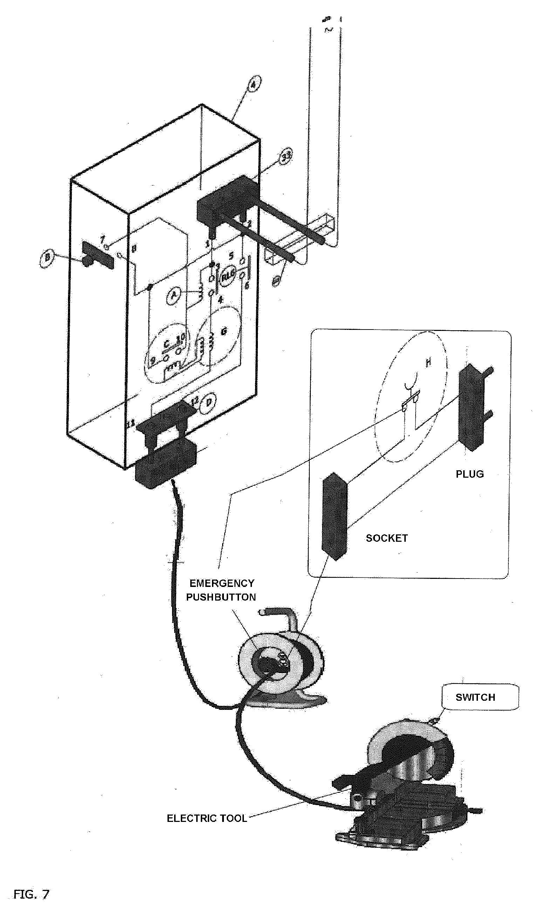

In fact, in a condition of activation of the portable user device, the system guarantees removal of the mains voltage, not only from the user device, but also from the supply cable and from the plug of the user device itself following upon intentional turning-off of the switch of the latter and moreover following upon onset of any of the following emergency situations:
- operation of a stop button (H in Figure 1 b) belonging to an extension device set between the socket D of the safety device according to the invention and the plug of the user device (Figure 7);
- pulling-out of the plug of the portable user device in a condition of activation, also in the presence of an extension;
- accidental dropping of the portable user device itself;
- tripping of an auxiliary actuator present in a hair-dryer when the latter is accidentally dropped into water; or
- tearing or interruption of the supply cable of the portable user device.

In addition to the situations listed above, the system is prearranged for entering into action in a conventional way according to what is illustrated in Figure 11; namely:
- following upon operation of a mains-supplied stop button (P) (Figure 1 b);
- following upon operation of a stop button (R) supplied at low voltage (Figure 1 b); or
- following upon a mains-voltage drop with the user device in a condition of activation: when the mains voltage returns, the user device does not start again.

### List of the drawings and detailed description

The above and further advantages will be better understood from the annexed drawings, wherein:
- Figure 1 shows a first embodiment of the invention set between a plug L and a supply socket D;
- Figure 1 b shows the safety device of Figure 1 with provision of the emergency pushbuttons;
- Figure 1 c shows the safety device of Figure 1, connected to the corresponding supply socket of which is a portable user device for enabling creation of an interlock circuit;
- Figure 1d shows the safety device of Figure 1 sent into a condition of deactivation after the plug E of the user device has been pulled out of the supply socket D;
- Figure 2 shows an electrical diagram of the safety device of Figure 1 following upon turning on of the hold-to-run switch F of the user device;
- Figure 2B shows the electrical diagram of Figure 2 in a condition of deactivation following upon turning-off of the switch of the user device;
- Figure 2C shows the electrical diagram of Figure 2 at the instant when an impulsive pressure is exerted on the pushbutton (B) to activate the interlocking function;
- Figure 3 shows a further electrical diagram of the safety device of Figure 2, which is permanently interlocked following upon release of the pushbutton B;
- Figure 3B shows an embodiment of the invention at the moment when the hold-to-run pushbutton switch F of the user device is pressed for activating the interlocking function;
- Figure 3C shows an embodiment of the safety device in a condition of activation following upon impulsive pressure exerted by the operator on the purposely provided pushbutton B;
- Figure 4 shows an embodiment of the invention with automatic de-activation of electrical interlocking following upon accidental dropping of a portable user device in a condition of activation;
- Figure 5 shows an embodiment of the invention with a specific emergency circuit provided on a hair-dryer;

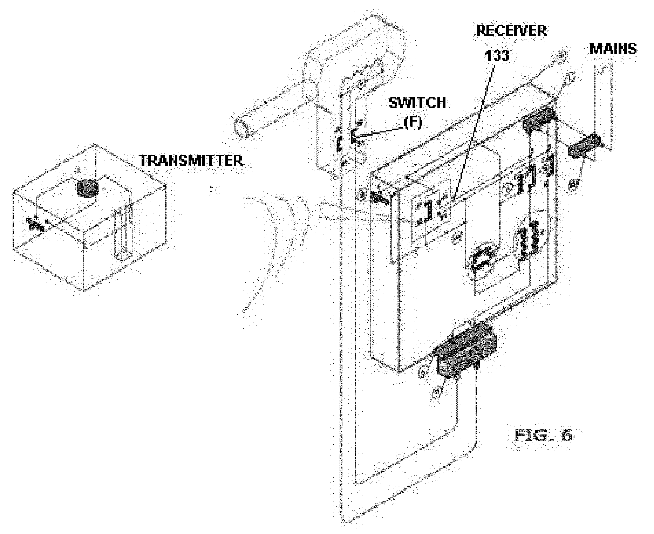

- Figure 6 shows an embodiment of the invention with provision of a remote control in the radiofrequency circuit;
- Figure 7 shows an embodiment of the safety device according to the invention with an auxiliary accessory comprising a supply cable extension for the portable user device to enable use of the latter at a distance from the power source;
- Figure 8 shows an electrical diagram of a conventional interlocked socket;

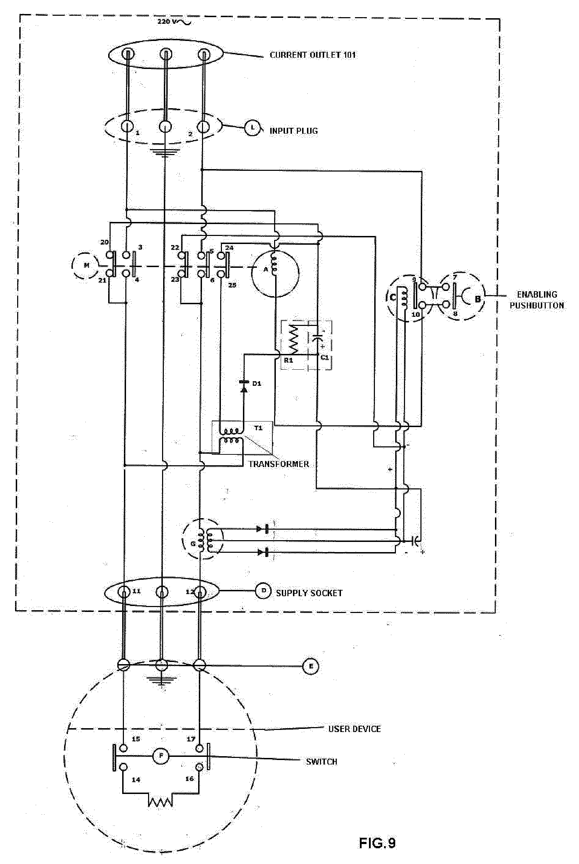

- Figure 9 shows a preferred electrical diagram of the invention, devised for enhancing the flexibility of use;
- Figure 10 shows an example representing the safety device according to the invention in which interlocking is de-activated when a user device is accidentally dropped in water; and
- Figure 11 shows an electrical diagram of a conventional interlock device.

With reference to the attached drawings the portable safety device according to the invention is now described.

In order to increase the flexibility of use of the safety device two versions have been devised, here referred to as version (A) and version (B).

In its basic configuration, version (B) imposes simultaneity of execution of the functions of enabling and activation of the safety device according to the invention, with the possibility of rendering the pushbutton for enabling the safety device according to the invention remote by integrating a remote-control system therein (to the advantage of convenience of use).

On the basis of this innovative feature, from the working area, which may even be located away from the safety device according to the invention, it is possible to perform both the function of enabling and the function of activation of the safety device.

The technical solution adopted in version (A) of the safety device achieves the same result, but in a different way by inserting within the safety device according to the invention, which is prearranged for receiving it, a simple device designed to protract the enabling function for a given time interval following upon release of the enabling pushbutton. During said interval, the operator can reach the working area and activate the user device, thus bringing about remote activation of electrical interlocking.

Once said interval has elapsed, remote activation will no longer be possible, but it will be necessary to repeat the enabling operation.

The above operating mode rules out the possibility of any unforeseeable start of the interlocking function itself. It is evident that this prerogative of the circuit in the version (A) of the safety device according to the invention is of fundamental importance for the purposes of safety.

### Operation of version (A)

Pressure, even of an impulsive type, exerted on the enabling pushbutton sends the excitation voltage to the contactor M. Via the corresponding contacts 3-4 and 5-6 the mains voltage reaches the primary winding of the transformer T1. A rectifier circuit, constituted by the diode D1, charges the capacitor C1. Said charge decays with the time constant T given by the product R·C, where C is the capacitance of the capacitor C1 and R the resistance of a resistor R1 connected in parallel to the capacitor C1.

Enabling of the safety device according to the invention persists even after release of the corresponding pushbutton B for a time approximately equal to T. During this interval, it is possible to carry out normal activation (even remote activation) of the interlocking function, according to the standard modality envisaged for the safety device according to the invention.

Upon turning-on of the switch of the user device, consequent closing of the contacts 9-10 of the relay C activates the coil A of the contactor M, so that the latter starts to supply the mains current to the user device.

Consequently,
- current will flow in the primary winding of the transformer (current probe) G;
- the current induced in the corresponding secondary winding will excite the relay C permanently; and
- in turn the coil A of the contactor M will in turn remain excited along with the relay C thus interlocking the contactor M itself.

The device is mechanically constituted by an insulating casing or box 4 of small dimensions, fixed with respect to which are a plug L, a socket D, and an enabling pushbutton B (Figure 1).

Housed inside the box is a circuit connected upstream to the terminals of the plug L and downstream to the socket D.

The circuit is mains-supplied when the plug E is inserted into any current outlet.

Said circuit comprises the contactor M, the auxiliary relay C, and the current transformer G.

The contacts 3 and 5 corresponding to the two poles of the contactor M are directly connected to the current plug L.

The corresponding contacts 4 and 6 are connected to the socket D according to the following scheme:
the contact 6 is directly connected to the terminal 12 of the socket D, and
the terminal 4 is connected to the terminal 11 of the socket D, with the primary winding of the transformer G set in series.

The secondary winding of said transformer supplies the excitation coil of the auxiliary relay C.

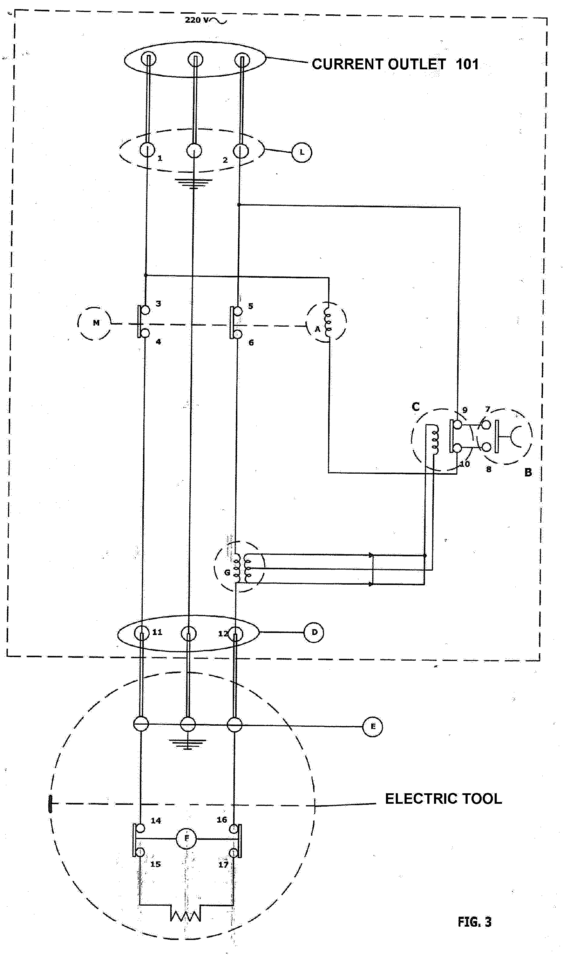

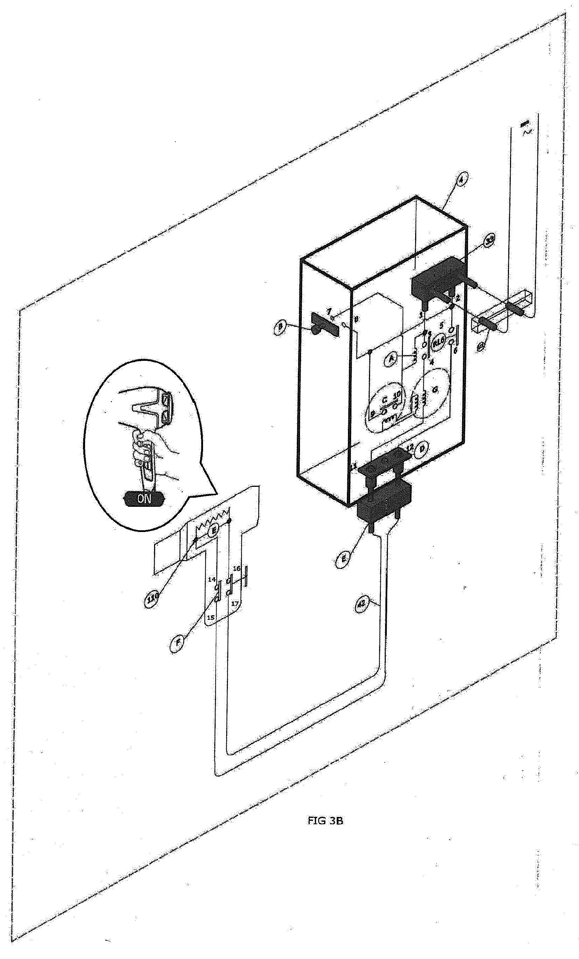

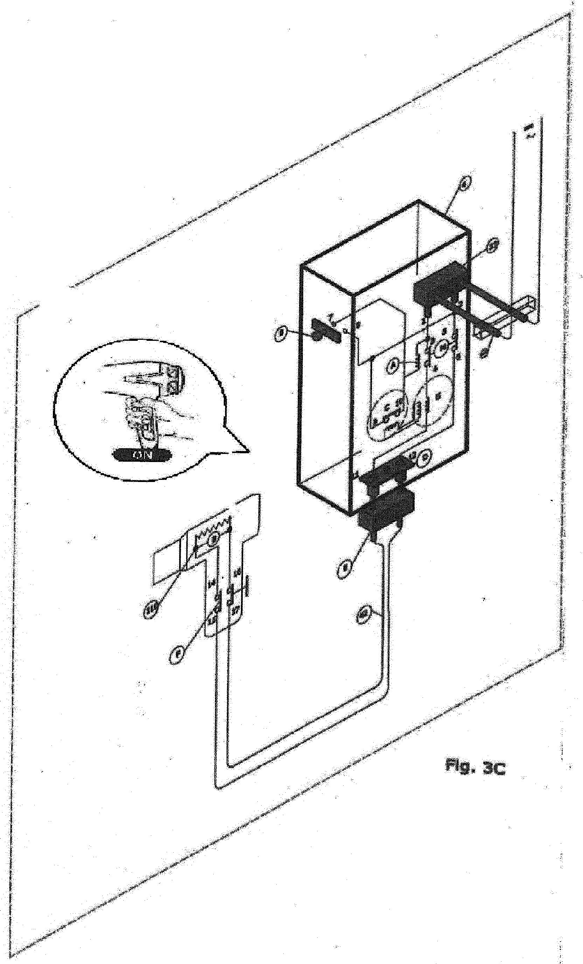

The contacts of the contactor M are normally open (Figure 1) so that the socket D will be supplied when the contactor M is activated (Figure 3).

The contactor M consequently controls supply of current to the socket D and hence to the user device connected thereto via its own plug E, and the user device itself forms an integral part of operation of the circuit.

### Operation of version (B)

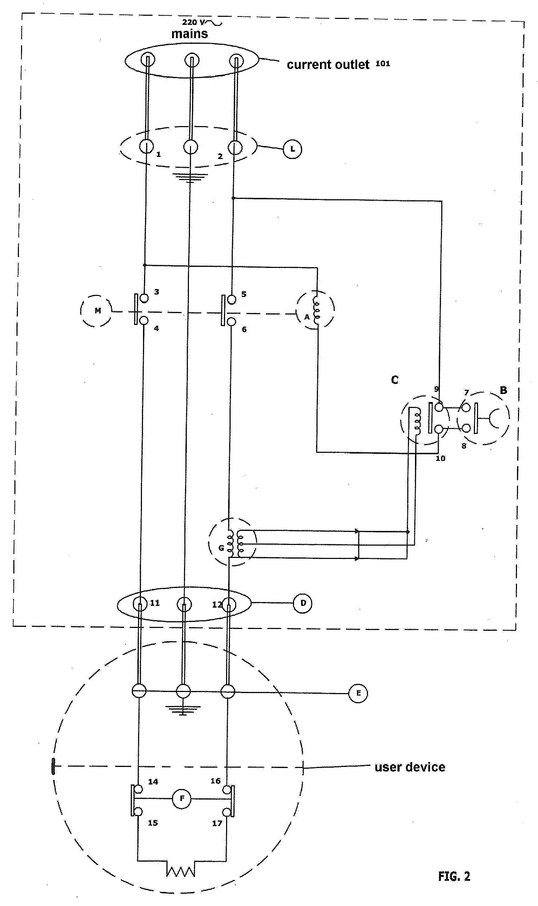

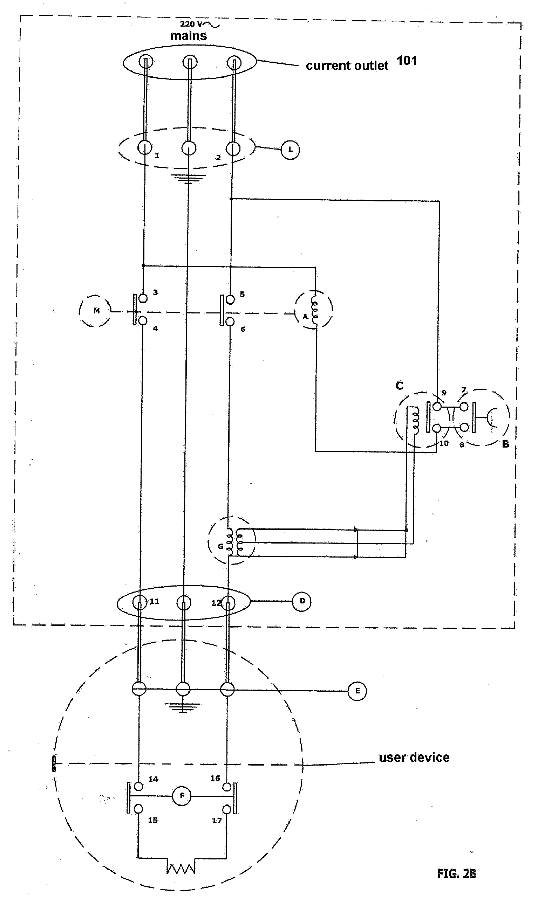

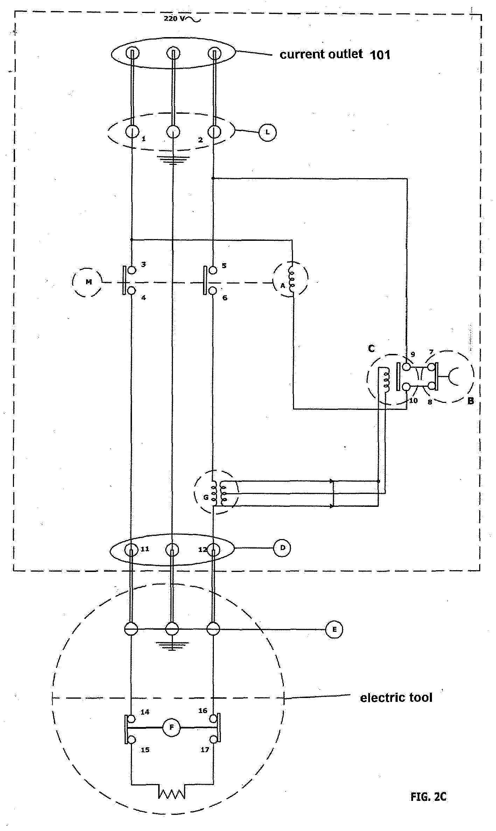

When the enabling pushbutton B is pressed, the contactor M is excited; upon release of said pushbutton one of the following two cases arises:
case 1: no electrical device is connected to the socket D (Figure 1), or an electrical device is connected but is not activated (Figure 1C).
case 2: a portable user device is connected to the socket D, and said user device is activated via its switch F; both of the functions are indispensable for operation of the circuit (Figure 2).

In case 1, the contactor M, upon release of the enabling pushbutton B, drops out and the voltage is removed from the socket (safety condition).

In case 2, even after release of the enabling pushbutton B, as long as the user device is connected to the socket D and remains active, the primary winding (in the preferred embodiment) of the transformer G will be traversed by the current, and the voltage induced on the secondary winding will maintain the relay C, and the contactor M along with it, excited. The latter will remain interlocked in order to provide, through the socket D, the current supply to the portable user device connected thereto. When interlocking is active, de-activation of interlocking of the safety device according to the invention at the end of use of a user device does not require a Stop button as in conventional circuits . De-activation of interlocking is obtained by acting on the switch F belonging to the portable user device, i.e., by de-activating the switch itself:
- the contacts 14-15 and 16-17 are opened (Figure 2B);
- the current supply to the user device is interrupted;
- the circuit downstream opens, cutting off the current that flows in the primary winding of the transformer G;
- the current induced in the corresponding secondary winding vanishes; and
- the relay C, and the coil A of the contactor M along with it, is de-energized; consequently, the latter cuts off the current to the socket D and to the user device connected thereto (Figure 2B).

### Further accessory functions

The circuit of the safety device according to the invention is prearranged for providing tripping devices (actuators) in three different positions H-P-R (Figure 1 B). These are designed to trip when they are intentionally enabled or as a result of accidental events upon onset of emergency conditions, such as accidental dropping of the user device, failure of the user device, dropping of a hair-dryer in water, etc.

The actuators are equipped with two normally closed contacts, and the actuator will trip by opening said contacts so as to de-activate interlocking of the safety device according to the invention and consequently interrupt the mains current supplied by the socket D of the safety device to the portable user device connected thereto.

Provided hereinafter are some examples.

An auxiliary accessory for an extension set between the socket D of the safety device according to the invention and the plug E of a portable electric tool will enable use thereof in central working areas of premises. The auxiliary accessory comprises a winder wound round the drum of which is the electric cable, there being fixed on one of the walls of the drum the socket and a stop button H, the latter being connected in series to the supply cable (Figure 7).

In the event of an emergency, the pushbutton H will be accessible for being actuated by the operator, to de-activate interlocking of the safety device according to the invention and consequently interrupt supply of current to the socket D to which the electric tool is connected via the extension (Figure 7). This function of the safety device according to the invention is not feasible with conventional circuits.

The position R in the circuit of the safety device according to the invention is prearranged for providing low-voltage actuators, which are autonomous from the safety device according to the invention and are located at a distance therefrom. In this case, the standards currently in force envisage that the actuators should be supplied with a low voltage.

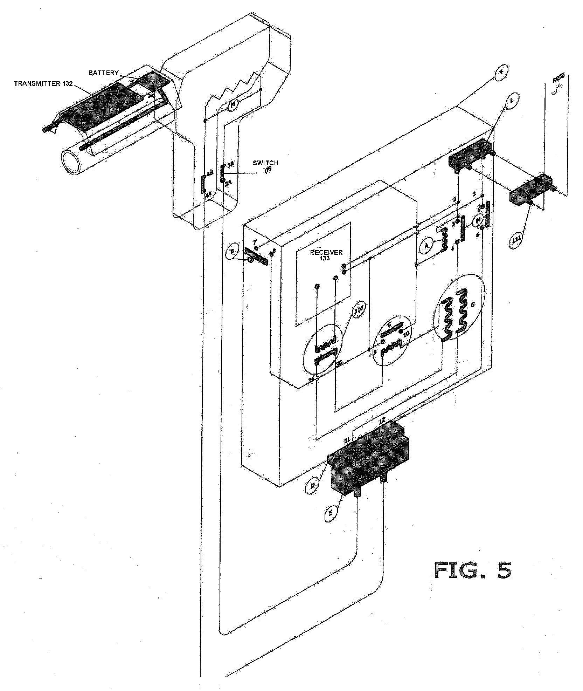

In the position R on the safety device according to the invention, with reference to Figure 5, an auxiliary actuator will be provided that is to trip in the case where a hair-dryer connected to the safety device happens to drop into water while it is on. Fixed to the front part of the hair-dryer (where the hot air comes out) is a fluid-tight container of small dimensions, housed within which are a transmitter 132 and a battery. A pair of fixed electrodes comes out of the container on the outer wall of the container itself. In the case where the hair-dryer falls into water, the resistance between the electrodes drops and causes the transmitter 132 to turn on. The transmitter 132 will send an encoded alarm message to the receiver 133. This receiver, which is installed within the body of the safety device according to the invention and is mains-supplied, receives the message, decodes it, and activates the coil of a relay 118 for opening the corresponding contacts 35-36. The latter are in series with the coil of the relay C so that, when they are activated, they will open (even for a short time) and de-energize the relay C, and, along with this, the coil A of the contactor M. The result will be de-activation of electrical interlocking, thus removing definitively, also in this case, the supply voltage from the socket of the safety device according to the invention (and hence from the hair-dryer), thus restoring the safety conditions (Figure 5).

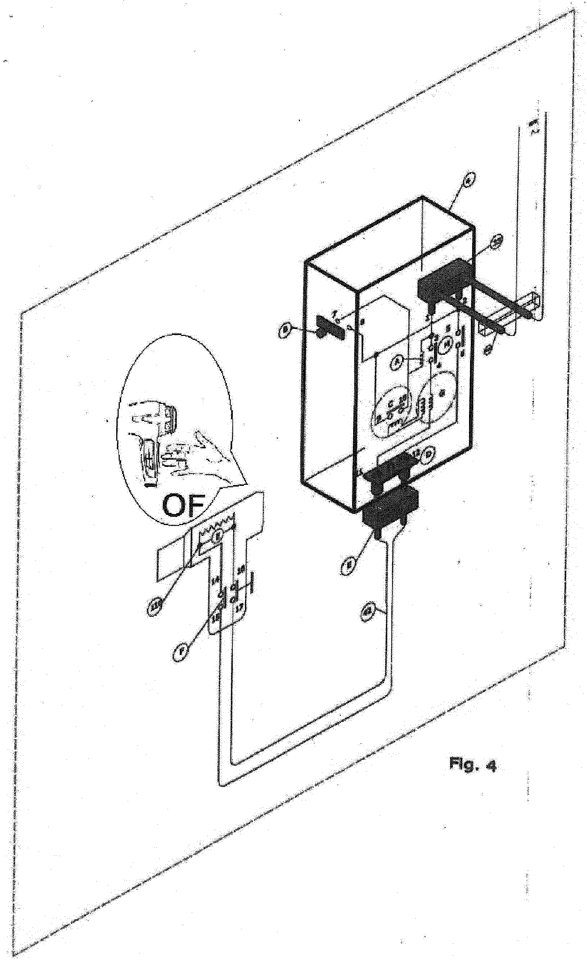

Another example of operation regarding use of the safety device according to the invention, in combination with a portable user device, is represented in Figures 3B-4, where housed in the grip of the user device is a pushbutton switch F, the contacts of which 14-15 and 16-17 are normally open (Figure 1 C). The switch F will be operative for activating interlocking of the safety device according to the invention when the operator manually grips the user device in order to press the (hold-to-run) switch F and induce its contacts 14-15 and 16-17 to close (Figure 3B). Interlocking of the safety device according to the invention will be activated by pressing for an instant the enabling pushbutton B provided thereon (Figure 3C). When the user device is put down after use, the grip is released and thereby the pressure on the pushbutton switch F is no longer exerted, so that its contacts 14-15 and 16-17 open. The user device thus switches off, the current flowing in the primary winding of the transformer G is interrupted, the current induced in the corresponding secondary winding vanishes, the relay C is de-energized, and, along with this, the contactor M, thus de-activating interlocking of the safety device according to the invention with consequent removal of the mains voltage from the supply cable, the inside of the grip, and the user device itself (Figure 4). A similar safety procedure is automatically carried out by the safety device according to the invention in the case where the portable user device were to slip out of the hand of the operator and accidentally fall. In this case, release of the grip of the user device means that manual pressure is no longer exerted on the pushbutton switch F, and this induces opening of its contacts 14-15 and 16-17, thus de-activating interlocking of the safety device according to the invention (Figure 4). This emergency function is envisaged in the stop category 0 specified in the standards IEC EN 60204-1 and UNI ISO 13850, with which the safety device according to the invention has the necessary requisites to gain access to compliance.

The safety device according to the invention can, in fact, gain access to compliance to the above standards owing to the fact that de-activation of interlocking thereof when the user device is accidentally dropped is immediate and has priority over the function of restarting of the user device, and moreover owing to interruption of the mains voltage to the supply cable and to the user device itself.

Restarting of the circuit of the safety device according to the invention so that interlocking can be activated once the enabling pushbutton B has been pressed is subordinate to restoring. Restoring will be operative after the operator has authorized it by gripping the handle of the user device (Figure 3B).

Figure 10 represents an example in which interlocking of the safety device according to the invention is de-activated according to the modalities referred to above when it the user device is accidentally dropped into water while it is on. The electrical parts of the user device in contact with the water do not involve any type of problem.

After interlocking has been activated, the safety device according to the invention, in the case where it is supplying via its socket D the mains current to the user device connected thereto via its plug E, will be operative for tripping and automatically de-activate interlocking in the case where the plug E is pulled out of the socket D, so that the mains voltage is removed from the latter (Figure 1 D).

In carrying out the above type of tripping, the safety device according to the invention implements a function of automatic de-activation of interlocking as is prescribed by the standard IEC EN 60459-1, so that the function in question has the necessary requisites for access to compliance.

De-activation of interlocking is enabled by removal of the user device; removal causes opening of the circuit downstream so that the flow of current in the primary winding of the transformer G ceases, and the same functions as those described on page 7 of the present description are carried out.

There is envisaged provision of a remote control designed to activate electrical interlocking at a distance, which in practice renders operation of the enabling pushbutton remote. This may prove useful in version (B) of the safety device, in the case where there is the need to use for a long period of time the portable user device supplied via an extension for operating in a position far from the safety device according to the invention.

The remote control consists of two distinct circuits:
a radio transmitter; and
a radio receiver.

The transmitter is located in the proximity of the user device, in a position that is readily accessible to the operator. It comprises a battery, an enabling pushbutton for (remote) activation of electrical interlocking of the safety device according to the invention, and a low-power transmitting module having a section for encoding the activation command (encoding is necessary in order to prevent any possibility of accidental activation of electrical interlocking of the safety device according to the invention).

When the pushbutton is pressed, the transmitter sends a coded message. This message is received and decoded by the receiver.

The receiver is housed within the casing of the safety device according to the invention.

In response to decoding of the message received, the receiver will activate supply of voltage to the socket of the safety device according to the invention and, via the extension, to the user device.

The safety device according to the invention is prearranged for implementing this function: in fact, it is sufficient to install a relay having a normally open contact, the terminals of which are connected in parallel to the terminals of the enabling pushbutton already present on the box of the safety device according to the invention. Once the receiver has decoded and recognized the message received, it will send an excitation pulse to the contactor M. Following upon said pulse, electrical interlocking of the safety device according to the invention will be activated according to the modalities described previously. Following upon activation, operation and tripping of the safety device according to the invention (automatic management of removal of the voltage supply to the socket) will remain the ones described previously.

The invention achieves important advantages.

The safety device according to the invention is operative for performing the functions regarding activation and de-activation of interlocking according to the operating modalities required by what is prescribed in the standard IEC EN 60204-1, 2014 edition. These operating modalities, in particular the hold-to-run function for activating interlocking, is required by the aforesaid standards in so far as on mains-supplied mobile machines and portable user devices it is not possible to apply safety functions or protection measures for certain types of operation.

Version (A) of the safety device is used for performing the functions of enabling and remote activation and de-activation of interlocking in the required operating modalities listed below.
a) Specification 9.6.2.3 on page 80 requires an enabling function; in the present safety device, this enabling function is activated by pressing the pushbutton present on the front box of the safety device, which enables, within a pre-set time interval, remote activation of interlocking.
b) Specification 9.2.5.2 on page 76 calls for a hold-to-run control for activation of interlocking; in the present safety device, this function is performed for remote activation (without any auxiliary wiring) of interlocking by pressing the ON-switch of the portable user device.
c) Specification 9.2.7.3 on page 82 calls for a means for initiating automatically the stop function of de-activation of interlocking; in the safety device according to the invention, this is initiated in concomitance with activation of interlocking. Turning-off of the switch of the user device or situations of danger and emergency of the user device cause remote de-activation (without the need for any auxiliary wiring) of said automatic stop means, along with de-activation of interlocking of the safety device. Version (B) of the safety device is used in hazardous situations of use of the portable user device in order to comply with specification 9.2.6.2 on page 80; this calls for implementation of the operating modalities listed below.
d) Provision of two devices for controlling interlocking and their concurrent actuation by both hands; in the present safety device, this operation is performed by the operator using his right hand (Figure 3B) while with his left hand he applies impulsive pressure on the pushbutton (B);
e) Continuous concurrent actuation for activation of interlocking during the hazardous situation for the user device; in the present safety device, this operation is illustrated in Figure B.
f) Machine operation ceases, with consequent de-activation of the interlocking function, upon the release of either one or both of the control devices when hazardous situations for the user device are still present; in the present safety device this operation is illustrated in Figure 4.

De-activation of interlocking carried out in the aforesaid operating modalities characterizes a category 0 stop in emergency conditions, as per specification 9.2.5.4.2 on page 78.

Both versions of the safety device, namely, version (A) and version (B), following upon activation of interlocking are operative for de-activating said interlocking function in the following situations of use of the portable user device that involve danger or emergency:

### when the user device is accidentally dropped

- tearing or interruption of the supply cable of the portable user device;
- failure of the user device;
- actuation of an emergency pushbutton provided on the cable winder of an extension cable connected between the socket of the safety device and the plug of the user device; or
- pulling-out of the plug of a user device, in a condition where the latter is activated, (or else of the plug of an extension lead) from the supply socket of the safety device (as specified in the standard IEC EN 60 409-1),

### in the presence of fortuitous causes, such as:

- following upon a mains-voltage drop with the user device in a condition of activation, when the power supply returns, the user device does not start again;
- voltage overload; and
- actuation of an emergency pushbutton or limit switch provided on the power circuit of the safety device.

The present invention has been described according to preferred embodiments thereof; however, equivalent variants may be devised without thereby departing from the sphere of protection of the present invention.

## Claims

1. A portable safety device, configured for being mains supplied when a plug (L) is inserted into any current socket (101), wherein:
a portable user device can be connected with a plug (E) to a supply socket (D);
the safety device is rendered operative by an electrical interlock circuit set between the mains-supply plug (L) and the supply socket (D);
activation of interlocking of the circuit is subordinate to closing of the circuit itself downstream, via switching-on of a (hold-to-run) switch (F) of the user device; and
activation of the circuit is configured in such a way that the coil (A) of the contactor (M) is excited for a brief interval following upon an impulsive pressure applied by the operator on the pushbutton (B), and the consequent supply of the mains current by the contactor (M) to the user device activates flow of the mains current into the primary winding of the transformer (G) in such a way that, after release of the pushbutton (B), the voltage induced on the secondary winding of the transformer (G) will maintain the relay (C) excited, and along with it the coil (A) of the contactor (M) will be operative for interlocking the contactor (M) itself.

2. The portable safety device according to Claim 1, configured for being combined with a portable user device equipped with a (hold-to-run) pushbutton switch (F) in such a way that, in the case where, during use, the user device in a condition of activation were to slip out of the hand of the operator and accidentally drop, the safety device remains operative in order to remove in emergency conditions interlocked activation of the contactor (M), said removal being due to the fact that, when the operator accidentally drops the user device, his hand no longer exerts any pressure on the pushbutton switch (F), which is configured for returning to its original position and thus automatically opening the corresponding contacts (14-15 and 16-17), said contacts being operative for removing the operating current from the user device, for opening the circuit downstream, for removing flow of the current in the primary winding of the transformer (G), and for causing the current induced in the corresponding secondary winding to vanish, thus de-activating the relay (C), and, along with this, the coil (A) of the contactor (M), the latter being operative for removing the mains current downstream thereof, in the socket (D), in the supply cable, and at the terminals (15-17) of the pushbutton switch (F).

3. The portable safety device according to the preceding Claim 1, wherein, when a user device connected to the safety device is no longer being used, in order to de-activate interlocking of the safety device itself, a stop button is not necessary, deactivation occurring in response to turning-off of the user device via the switch (F), which causes opening of the corresponding contacts (14-15 and 16-17), said contacts being operative for executing the functions of de-activation of interlocking of the safety device.

4. A portable safety device provided with an emergency circuit that de-activates interlocking, and consequently removes the mains voltage from a user device connected thereto, in the case where the latter accidentally comes into contact with water, such as in the case of a hair-dryer that falls into a wash-basin containing water, said de-activation of electrical interlocking occurring in response to contact of the water with the two electrodes belonging to the emergency circuit, with consequent reduction in the resistance between the two electrodes, this enabling deactivation of electrical interlocking.

5. A portable safety device prearranged for remote activation of electrical interlocking by turning on the switch of the user device; said function being subordinate to activation of the enabling function, the latter being prolonged for a given time interval following upon release of the pushbutton (B) so that, during said interval, the operator may reach a remote working area to turn on the switch of the user device, thus bringing about remote activation of electrical interlocking without any auxiliary wiring, once said interval has elapsed remote activation no longer being possible, but it being necessary to repeat activation of the enabling function; issuing of said remote command being **characterized in that**, in order to activate electrical interlocking from the working area, the enabling pushbutton is not necessary, but interlocking is activated by turning-on the hold-to-run switch of the user device; following upon deliberate de-activation of electrical interlocking, once the preset time interval has elapsed, the portable user device and the corresponding supply cable are not reached by any voltage.

6. The portable safety device according to Claim 1, wherein:
following upon activation of the interlocking function of the safety device, the contactor (M) remains interlocked until the user device is activated;
removal, in a condition of activation of interlocking, of the plug (E) belonging to a user device from the supply socket (D) of the safety device causes automatic deactivation of interlocking of the contactor (M);
said de-activation being **characterized in that** removal of the plug (E) from the socket (D) causes opening of the circuit downstream so that flow of current in the primary winding of the transformer (G) ceases, thus causing the current induced in the corresponding secondary winding to vanish, consequently de-energizing the relay (C), and, along with this, the coil (A) of the contactor (M).

7. A portable safety device, configured for enabling remote activation of interlocking by turning-on the hold-to-run switch (F) of the user device; said operating mode being **characterized in that**, since portable user devices are normally connected to the mains by means of the corresponding supply cable, on board such user devices it is not possible to apply any type of protection or safety measures, and consequently the hold-to-run action is provided for activating the safety device: turning-off of the switch (F) of the user device causes the hold-to-run action to cease, thus remotely interrupting supply of the mains voltage to the supply cable and the user device itself, thus automatically de-activating electrical interlocking.

8. The portable safety device according to Claim 1, wherein activation of the safety device by operating the purposely provided pushbutton (B) is subordinate to closing of the circuit downstream for enabling the latter, said activation occurring in response to closing of the circuit downstream caused by operation of the (hold-to-run) switch (F) for closing the corresponding contacts (14-15 and 16-17).

9. The portable safety device according to any one of the preceding claims, wherein an extension is provided between the socket (D) of the safety device and the plug (E) of a portable user device, a male plug being connected to one end of the extension, and there being set in series at the other end, where a socket is connected, an emergency pushbutton (H), the contacts of which are normally closed, the safety device being configured for entering into action to de-activate electrical interlocking and thus interrupt the current flowing in the extension used for supply of the user device, in the event of an emergency, said de-activation occurring in response to an enable command for de-activating the interlocking function of the safety device obtained by acting on the pushbutton (H), which is configured for opening the corresponding contacts and opening the circuit downstream in such a way as to de-activate flow of the current in the primary winding of the transformer (G), cause the current induced in the corresponding secondary winding to vanish, and de-activate the relay (C), and, along with it, the coil (A) of the contactor (M).

10. The portable safety device according to Claim 9, wherein, when the extension is inserted between the socket (D) of the safety device and the plug (E) of an electric tool, to enable remote control of the latter, the start command for activating the interlocking function of the safety device with supply of the mains voltage can be rendered remote, remote activation of the safety device being obtained by enabling of the circuit by turning on the switch (F) of the user device, and wherein a battery-supplied transmitter fixed with respect to an enabling pushbutton is configured, following upon operation of the latter, for transmitting a radio-frequency signal to a receiver contained in the safety device, which, upon reception of the signal, carries out activation of electrical interlocking, with an operation equivalent to that of the local enabling pushbutton.
